Europäisches Patentamt

(19) European Patent Office (11) Numéro de publication: **0 113 063**

Office européen des brevets **B1**

(12) **FASCICULE DE BREVET EUROPÉEN**

(45) Date de publication du fascicule du brevet: (51) Int. Cl.⁴: **B 65 G 47/32,** B 65 G 47/88
23.07.86

(21) Numéro de dépôt: **83112121.5**

(22) Date de dépôt: **02.12.83**

(54) Procédé et installation de manutention de tuyaux en fonte à emboîtement en vue de transformer des groupes de tuyaux en nombre pair en groupes de tuyaux en nombre impair.

(30) Priorité: **24.12.82 FR 8221855**

(43) Date de publication de la demande:
**11.07.84 Bulletin 84/28**

(45) Mention de la délivrance du brevet:
**23.07.86 Bulletin 86/30**

(84) Etats contractants désignés:
**DE GB**

(56) Documents cité:
**FR-A-2 189 286**
**GB-A-2 092 091**

(73) Titulaire: **PONT- A-MOUSSON S.A., 91, Avenue de
la Libération, F-54017 Nancy (FR)**

(72) Inventeur: **Malivoir, Roger, 21 Pré Hayer, F-54700
Pont- a-Mousson (FR)**
Inventeur: **Mayer, Gilbert, 74, rue de la
République, F-54000 Nancy (FR)**

(74) Mandataire: **Puit, Thierry, c/o Centre de
Recherches de Pont- à- Mousson B.P. 28, F-54703
Pont- à- Mousson Cedex (FR)**

## Description

La présente invention est relative à la manutention de tuyaux en fonte à emboîtement à la sortie de machines à centrifuger et d'un poste de revêtement desdits tuyaux. Plus précisément, l'invention concerne la manutention de tuyaux entre un transporteur amont horizontal ou à peu près horizontal sur lequel les tuyaux sont disposés tête-bêche, en nombre pair, un emboîtement d'un tuyau alternant avec un bout uni du tuyau suivant, et un transporteur aval recevant les tuyaux en lits destinés à être ultérieurement empilés pour confectionner des paquets de tuyaux.

Dans une demande de brevet déposée en France le 20 novembre 1981 sous le n° PV 81 21 931 (EP-A-0 080 063) est décrite une technique d'empilage rapide de lits de tuyaux sur un chariot pour confectionner des paquets de tuyaux.

Dans une autre demande de brevet déposée en France le 16 avril 1982 sous le n° PV 82 06 718 (EP-A-0 092 093) est décriteune technique pour disposer des tuyaux tête-bêche sur un transporteur à peu près horizontal alors qu'ils sortent des machines à centrifuger par groupes de deux ayant leurs extrémités à bout uni et à emboîtement côte à côte et non tête-bêche, et qu'un tuyau est parfois retiré après contrôlede qualité parce qu'il ne donne pas entière satisfaction.

Lorsque l'on doit confectionner sur le transporteur aval précité des lits de tuyaux tête-bêche en nombre pair alors que les tuyaux sont déjà disposés tête-bêche en nombre pair sur le transporteur amont précité, un simple transfert du groupe considéré d'un transporteur à l'autre est suffisant.

Mais la présente invention pose le problème de confectionner sur le transporteur aval des lits de tuyaux tête-bêche en nombre impair alors que les tuyaux sont disposés tête-bêche en nombre pair sur le transporteur amont, donc de transformer des groupes de nombres pairs en groupes de nombres impairs.

Ce problème pourrait être résolu en transférant les tuyaux un à un d'un transporteur à l'autre, mais ce serait une manutention lente, et surtout non adaptée à une arrivée rapide de tuyaux deux par deux en provenance de la fabrication par centrifugation et du revêtement. Cela ne manquerait pas de créer une obstruction entre le transporteur amont avançant par à-coups de deux pas à la fois, -un pas étant égal à un intervalle entre deux tuyaux consécutifs sur le transporteur amont, qui reçoit du poste de revêtement les tuyaux par paires- et le transporteur aval qui avance en continu.

La présente invention a pour objet un procédé et une installation qui résolvent ce problème de transformation d'un groupe pair en groupe impair au cours d'une circulation rapide des tuyaux, en opérant entre le transporteur amont et le transporteur aval un transfert de deux tuyaux à la fois, un seul tuyau étant retenu pour obtenir un nombre impair à partir d'un nombre pair.

L'invention a donc pour objet un procédé de manutention de tuyaux en fonte à emboîtement deux par deux, en vue de transformer des groupes de tuyaux de nombre pair en des groupes de nombre impair au cours d'un transfert de ces tuyaux deux par deux d'un transporteur à un autre, ce procédé étant caractérisé en ce que l'on forme ou l'on isole ces groupes de tuyaux de nombre pair constituant des groupes doubles, c'est-à-dire des groupes de tuyaux dont le nombre est le double du nombre impair de tuyaux que l'on veut grouper en lits impairs, puis, chaque groupe double est subdivisé en un premier et un second nombre pair de tuyaux dont on transfère le nombre pair supérieur d'une unité au nombre impair souhaité en laissant le dernier tuyau dudit premier nombre pair à cheval sur les deux transporteurs, on met provisoirement à part ledit dernier tuyau, puis on le ramène à cheval sur les deux transporteurs, en tête du deuxième nombre pair suivant à transférer, dont le nombre pair est inférieur d'une unité au nombre impair souhaité, puis l'on transfère ledit deuxième nombre pair suivant qui comporte en tête ledit tuyau mis à part, et l'on répète ces opérations en mettant successivement à part le dernier tuyau d'un preimer nombre pair en nombre supérieur d'une unité au nombre impair souhaité et en l'ajoutant à la tête du deuxième nombre pair suivant en nombre inférieur d'une unité au nombre impair souhaité.

L'invention a également pour objet une installation pour mettre en oeuvre ce procédé, cette installation du type comprenant un transporteur amont à chaînes sans fin, parallèles, munies de vés de supports individuels de tuyaux, espacés à pas ou intervalles réguliers, lesdites chaînes avançant de manière discontinue de deux pas à la fois pour recevoir par paires des tuyaux en provenance de la fabrication, et, à la suite de ce transporteur amont, un transporteur aval du type comportant deux chaînes sans fin parallèles entre elles et à celles du transporteur amont, l'extrémité amont du transporteur aval chevauchant l'extrémité aval du transporteur amont, ledit transporteur aval progressant en mouvement continu, cette installation étant caractérisée en ce que, entre les extrémités qui se chevauchent des chaînes du transporteur amont et des chaînes du transporteur aval, est interposé un élévateur d'un tuyau unique susceptible d'occuper deux positions, l'une de travail située au-dessus du niveau des chaînes des deux transporteurs amont et aval, l'autre inférieure située au-dessous desdites chaînes.

Grâce à l'invention, le transfert s'effectue rapidement non seulement parce que l'on fait passer deux tuyaux à la fois du transporteur amont au transporteur aval mais encore parce que c'est pendant un arrêt normal du transporteur amont qui avance normalement par à-coups, sans ajouter de temps mort, que l'on met provisoirement un tuyau à part.

D'autres caractéristiques et avantages apparaîtront au cours de la description qui va suivre.

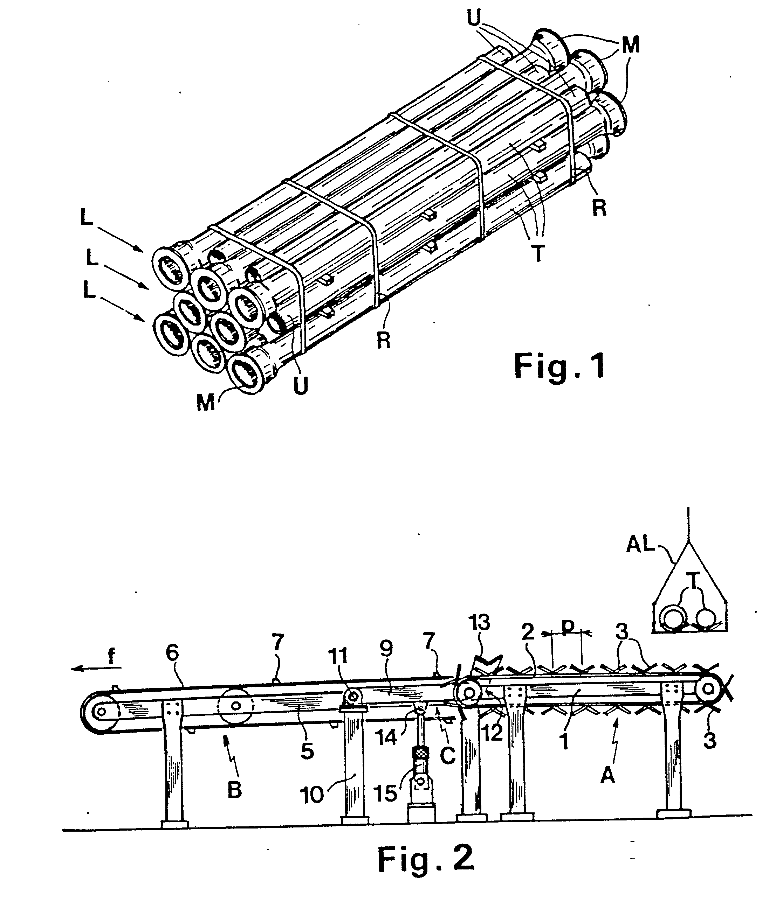

Au dessin annexé donné uniquement à titre d'exemple, - la Fig. 1 est une vue en perspective d'un paquet de tuyaux à obtenir formé de lits ou groupes de tuyaux en nombre impair, avec disposition tête-bêche des emboîtements et bouts unis;

- la Fig. 2 est une vue schématique en élévation à petite échelle d'une installation pour la mise en oeuvre du procédé de l'invention

- la Fig. 3 est une vue schématique en plan correspondant à la Fig. 2 avec, en trait interrompu, les tuyaux disposés tête-bêche formant un lit impair sur le transporteur aval

- la Fig. 4 est une vue schématique en élévation, à plus grande échelle que la Fig. 3, d'une partie au moins des transporteurs amont et aval et du dispositif élévateur en position escamotée de repos;

- la Fig. 5 est une vue en élévation analogue à la Fig. 4 de l'élévateur en position supérieure

- les Fig. 6 à 11 sont des vues encore plus schématiques illustrant le déplacement des tuyaux et leur transfert d'un transporteur à l'autre avec transformation de groupes pairs en groupes impairs;

- les Fig. 12 et 13 sont des vues schématiques en élévation analogues à la Fig. 4 d'une variante de réalisation à transporteur intermédiaire ascendant, respectivement en position basse et en position haute, dans le cas où le transporteur amont est à un niveau inférieur au transporteur aval.

Suivant l'exemple d'exécution des Fig. 1 à 3, l'invention est appliquée à la confection de paquets de tuyaux T en fonte, à emboîtement, liés par des liens ou rubans R métalliques ou plastiques.

Comme connu, les tuyaux sont disposés en lits superposés L constituant un empilage ou un paquet. Horizontalement sur chaque lit L et verticalement entre deux lits superposés, ils sont disposés tête-bêche, un emboîtement M d'un tuyau alternant avec un bout uni U d'un tuyau voisin afin de réduire l'encombrement de chaque paquet (Fig.1).

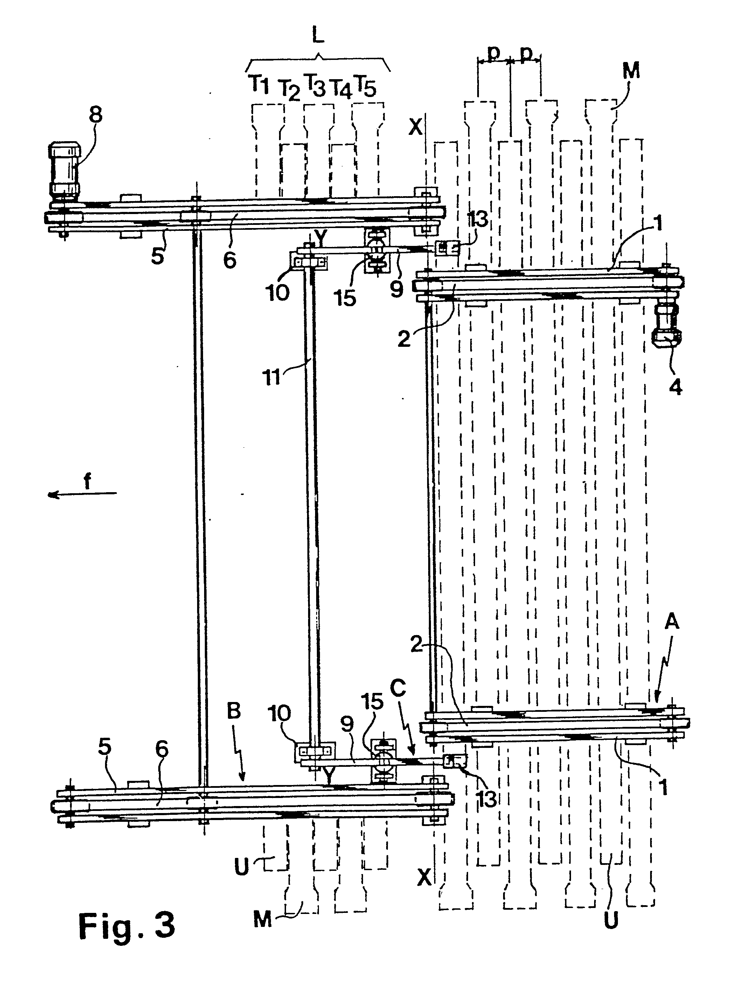

Plus particulièrement, l'invention est appliquée à la confection de lits tels que celui qui est représenté à la Fig. 3. Sur cette figure, cinq tuyaux identiques T1 à T5 (en trait interrompu) d'un lit L sont décalés longitudinalement les uns par rapport aux autres d'une longueur correspondant au minimum à celle de leur emboîtement M.

L'invention s'applique donc à la confection de lits ou groupes de tuyaux en nombre impair, alors que les tuyaux sortent de fabrication en nombre pair.

Suivant l'exemple d'exécution des Fig. 2 et 3, l'installation de l'invention comporte deux transporteurs de tuyaux suivant une direction d'avance marquée par une flèche f, l'un amont A recevant les tuyaux T tête-bêche par paires, l'autre aval 8 délivrant les tuyaux par groupes ou lits impairs, et, entre les deux, un moyen de mise à part d'un tuyau unique T, constitué par un élévateur C.

Les tuyaux T sont amenés par paires sur le transporteur A, par tous moyens connus, par exemple par un appareil de levage AL sur lequel ils sont disposés parallèlement entre eux mais tête-bêche.

Le transporteur A comporte un bâti 1 porteur d'une paire de chaînes sans fin parallèles 2 elles-mêmes portant des vés ou berceaux 3 de support individuel de tuyaux T régulièrement espacés d'un pas p et montés de telle sorte que les tuyaux T soient disposés perpendiculairement à ces chaînes 2. Les chaînes sans fin 2 sont entraînées en mouvement d'avance intermittente (ou discontinue) suivant la direction de la flèche f parallèle aux chaînes 2 par un groupe motoréducteur 4. Les mouvements d'avance intermittente, séparés régulièrement par des arrêts, ont une course égale à deux pas (2p) pour faire avancer deux tuyaux à la fois. Les tuyaux T sont posés par paires sur les vés 3 transversalement aux chaînes 2 donc à la direction d'avance f.

Le transporteur B comporte un bâti 5 porteur de chaînes sans fin 6 parallèles entre elles et aux chaînes 2 du transporteur A. Les maillons des chaînes 6, non représentés, forment une surface plane pratiquement continue de support des tuyaux T qui n'ont donc pas d'emplacement individuel défini sur le transporteur 8 contrairement au transporteur A muni de vés de support individuel 3. Les chaînes 6 portent, à espacements appropriés, des butées 7 de poussée ou d'entraînement d'un groupe ou lit de tuyaux T. Ces butées d'entraînement 7 sont fixées de manière démontable sur certains maillons des chaînes 6. Les chaînes sans fin 6 sont entraînées en mouvement d'avance continue suivant la direction de la flèche f par un groupe motoréducteur 8.

Les transporteurs A et 8 sont disposés entre eux de la manière suivante, de manière à permettre le transfert des tuyaux du transporteur A au transporteur B:

L'extrémité aval du transporteur A par rapport à la flèche f, matérialisée par les roues de renvoi des chaînes sans fin 2 est coaxiale à l'extrémité amont (par rapport à la flèche f) du transporteur 8 qui est matérialisé par des roues de renvoi des chaînes sans fin 6, la coaxialité de ces deux extrémités étant marquée par un axe transversal XX qui est celui desdites roues de renvoi des chaînes 2 et 6. En d'autres termes, les extrémités aval du transporteur A et amont du transporteur 8 se chevauchent d'un pas p suivant l'axe XX. En outre, la surface supérieure de support des chaînes 6 du transporteur B est à un niveau légèrement inférieur à celui des creux des vés 3 des chaînes 2 du transporteur A. Ainsi, lorsque les vés 3 des chaînes 2 tournent sur les roues de renvoi aval d'axe XX, ils descendent au niveau des chaînes 6 puis s'effacent au-dessous de ce niveau.

A cet effet, l'écartement des chaînes parallèles 6 est supérieur à celui des chaînes parallèles 2 tout en étant sensiblement inférieur à la longueur d'un tuyau T dont l'emboîtement M et le bout uni U sont en porte-à-faux par rapport aux chaînes 6. On rappelle que la longueur d'un tuyau T en fonte à emboîtement est d'au moins six mètres. Mais, bien entendu, l'invention s'applique égalementà des tuyaux à emboîtement de longueur inférieure à six mètres.

Au-delà du transporteur 8, c'est-à-dire en aval de celui-ci, se trouvent des moyens d'empilement des lits de tuyaux apportés par le transporteur 8, ces moyens étant par exemple ceux décrits dans la demande de brevet antérieure déposée en France le 20 novembre 1981 sous le n° PV 81 21 931 (EP-A-0 080 063).

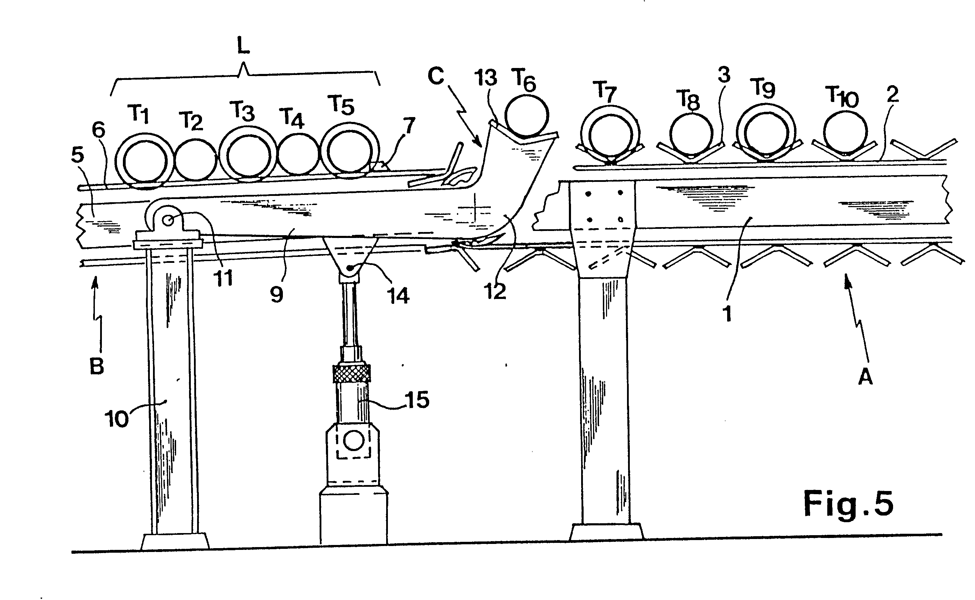

Entre les chaînes 2 et 6 des transporteurs A et 8 (Fig. 2-3-4-5) est disposé l'élévateur C constitué par une paire de leviers ou bras élévateurs 9 articulés à une extrémité sur des poteaux 10, par un arbre 11 d'axe YY parallèle à l'axe XX, en aval de celui-ci, par rapport à la flèche f. Les leviers 9 sont distants d'une valeur intermédiaire entre les écartements des chaînes parallèles 2 et 6 des transporteurs A et B.

A leur autre extrémité, après un coude 12 situé au voisinage de l'axe XX, les leviers 9 portent chacun un vé 13 de support individuel d'un tuyau T en position horizontale, identique ou analogue aux vés 3 du transporteur A. Les deux vés 13 sont situés près de l'extrémité aval du transporteur A et de l'extrémité amont du transporteur B, les creux desdits vés 13 étant au voisinage de l'axe XX commun auxdites extrémités.

En une position intermédiaire de leur longueur, chacun des leviers 9 est articulé en 14 à l'extrémité d'une tige de vérin 15 à fluide sous pression, par exemple à double effet, les deux vérins 15 identiques étant susceptibles de fonctionner en synchronisme.

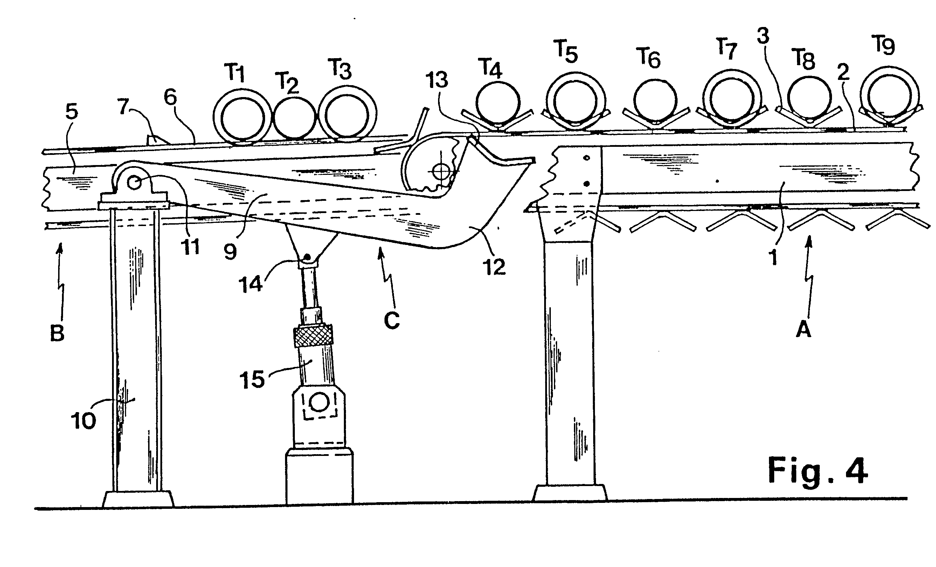

Ainsi la paire de leviers 9 de l'élévateur C est susceptible d'occuper deux positions:
- une position basse ou de repos (Fig. 4 dans laquelle les vés 13 se trouvent au-dessous du niveau de support des chaînes 2 du transporteur A),
- et une position haute ou de travail dans laquelle les vés se trouvent sensiblement au-dessus des vés 3 du transporteur A.

<u>Fonctionnement (Fig. 4, 5 et 6 à 11)</u>

Soit à transférer des tuyaux tête-bêche en nombre pair et numérotés de T1 à T10, et au-delà, du transporteur amont A au transporteur aval B pour y être regroupés en lits L impairs, par exemple de cinq tuyaux.

On procède de la manière suivante à l'aide de l'installation de l'invention:

Le transporteur amont A reçoit les tuyaux par paires, tête-bêche, de l'appareil de levage AL qui les dépose sur deux vés consécutifs 3. Le transporteur A avance par intermittence (en discontinu) de deux pas à la fois en marquant des temps d'arrêt. Le transporteur aval B avance en continu.

A chaque avance de deux pas (2p), le transporteur A déverse ou transfère deux tuyaux à la fois sur le transporteur B, l'élévateur C à bras 9 étant en position basse (Fig. 4).

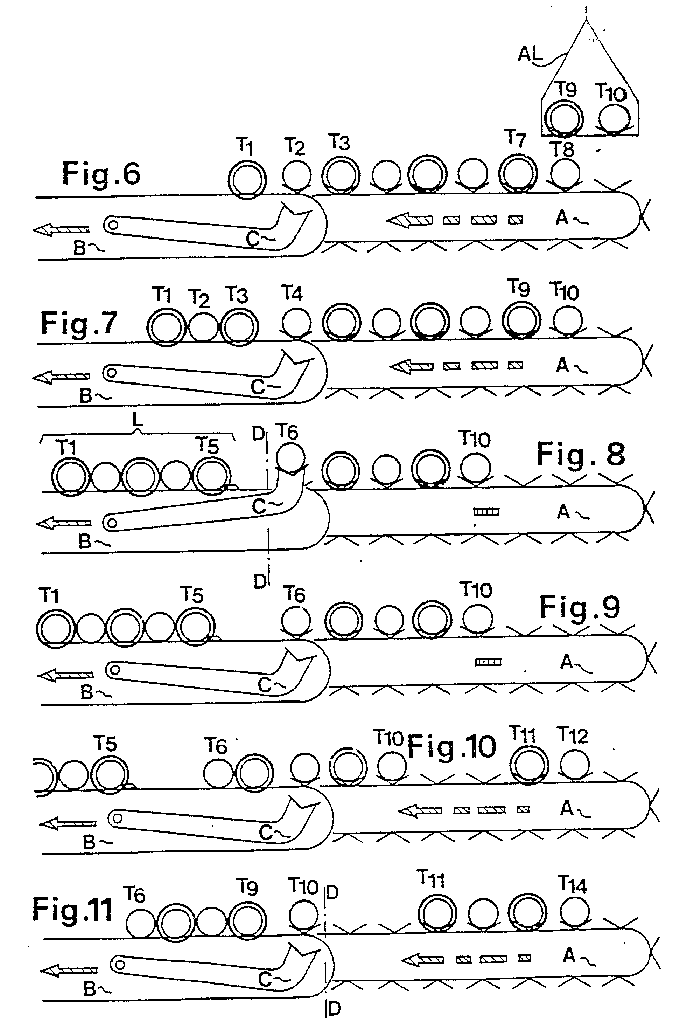

On suivra sur les Fig. 6 à 11 la formation de deux lits successifs de cinq tuyaux numérotés de T1 à T5 et de T6 à T10 à partir de dix tuyaux déposés par paires sur le transporteur A:

- Fig. 6 <u>(transporteurs A et B en mouvement et élévateur C en position basse)</u>: le tuyau T1 vient d'être transféré sur le transporteur B. Les tuyaux T2, T3 et T4 sont à l'extrémité aval du transporteur A. Le tuyau T2 est au-dessus des vés 13 de l'élévateur C et à cheval sur les transporteurs A et B. Le transporteur A est rempli jusqu'au tuyau T8. Une paire de tuyaux T9 et T10, tête-bêche, sont amenés par l'appareil de levage AL, prêts à être déposés sur le transporteur A, à la suite du tuyau T8.

- Fig. 7 <u>(transporteurs A et B en mouvement - élévateur C en position basse)</u>: les tuyaux T2 et T3 viennent d'être transférés sur le transporteur B. Les tuyaux T4, T5 et T6 sont à l'extrémité aval du transporteur A. Le tuyau T4 est au-dessus des vés 13 de l'élévateur C. Par ailleurs, l'appareil de levage a déposé une paire de tuyaux T9 et T10 à la suite du tuyau T8 sur le transporteur amont A.

- Fig. 8 <u>(transporteur A à l'arrêt - élévateur C en position haute mise à part du tuyau T6).</u>

Avant son arrêt, le transporteur A, ayant avancé de deux pas par rapport à l'état de la Fig. 7, a amené le tuyau T5 sur le transporteur B et le tuyau T6 au-dessus des vés 13 de l'élévateur C à bras 9 et à cheval sur les transporteurs A et B. La ligne de démarcation D entre le lit L des tuyaux T1 à T5, qui est sur le transporteur B et le lit L suivant à former, est tracée entre les tuyaux T5 et T6. Lors de l'arrêt normal du transporteur A, lorsque le tuyau T6 est à la fois sur l'extrémité aval du transporteur A et sur l'extrémité amont du transporteur B, donc dans la zone de chevauchement des deux transporteurs, l'élévateur C monte en position haute et soulève le tuyau T6 au-dessus des transporteurs A et B pendant que le transporteur B en mouvement éloigne le premier lit de tuyaux T1 à T5 par une butée ou un poussoir d'entraînement 7. Ce soulèvement du tuyau T6 au-dessus des vés 3 empêche son entraînement par le transporteur B, et laisse le temps au premier lit de tuyaux Tl à T5 de s'éloigner.

Le tuyau T6 est donc mis à part pendant l'arrêt du transporteur A qui est court. Mais cette mise à part n'est que provisoire. Par ailleurs, après le tuyau T10 qui termine les deux lits successifs de cinq tuyaux, deux vés 3 successifs sont laissés vides sur le transporteur A afin de séparer d'un intervalle minimal de deux pas (ou d'un multiple de deux pas) l'ensemble des tuyaux T1 à T10 de l'ensemble suivant des tuyaux T11 à T20 (Par rapport aux lits de cinq tuyaux à constituer, les ensembles T1 à T10, T11 à T20, T21 à T30, etc... peuvent être désignés par l'expression "groupes doubles").

Cet intervalle vide entre deux groupes doubles correspond à la place occupée par deux tuyaux ou un multiple de deux tuyaux successifs sur le transporteur A puisque celui-ci avance par à-coups de deux pas.

Fig. 9 <u>(transporteur A arrêté - élévateur C en</u>

<u>position basseretour du tuyau T6 sur les transporteurs A et B)</u>: Pendant l'arrêt du transporteur A, qui est court, l'élévateur C à bras 9 descend en position basse et redépose le tuyau T6 à cheval sur les transporteurs A et B à la place exacte qu'il avait quittée sur les vés 3 au stade de la Fig. 8. Le transporteur B entraîne plus loin le lit impair formé des tuyaux T1 à T5.

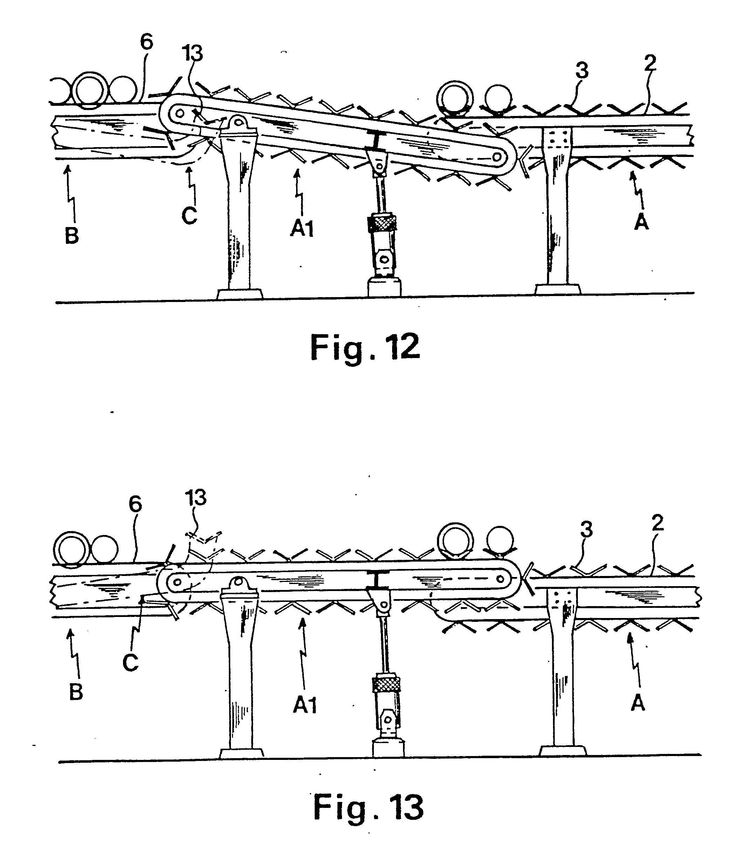

Fig. 10 <u>(transporteurs A et B en mouvement - élévateur C en position basse)</u>: Après une avance de deux pas du transporteur A, le premier lit T1 à T5 étant éloigné sur le transporteur B, le tuyau T6 est transféré sur le transporteur B. Les tuyaux suivants T7 et T8 sont transférés sur le transporteur B, et les tuyaux T9 et T10 vont l'être à leur tour avant l'arrivée des deux vés 3 vides du transporteur A. Par ailleurs l'appareil de levage AL a déposé les tuyaux T11 et T12 sur le transporteur A.

- Fig. 11 <u>(transporteurs A et B en mouvement - élévateur C en position basse)</u>: Le tuyau T9 a été déposé sur le transporteur B. Le tuyau T10 est au-dessus des vés 13 de l'élévateur C. L'élévateur C reste en position basse. Le tuyau T10 va être pris en charge par le transporteur B. La ligne de démarcation D tracée après le tuyau T10 marque la fin du deuxième lit impair et du premier groupe double. L'intervalle vide de deux pas (deux vés 3 vides) entre le tuyau T10 et le tuyau T11 sépare le deuxième lit impair du troisième lit impair, et le premier groupe double du deuxième groupe double.

L'appareil de levage AL a déposé les tuyaux T13 et T14 sur le transporteur A. L'élévateur C ne bougera pas jusqu'à ce que le tuyau T16 arrive au-dessus des vés 13 comme le tuyau T6 à la Fig. 8. Alors, d'une manière qui n'est plus illustrée mais qui est analogue à celle des figures précédentes 8 et 9, pendant un arrêt du transporteur A, le tuyau T16 sera mis provisoirement à part comme le tuyau T6 à la Fig.8, puis ramené à cheval sur les transporteurs A et B comme à la Fig. 9, par levée puis descente de l'élévateur C.

Le cycle continue ainsi, formant des groupes doubles de deux lits impairs T11 à T20, T21 à T30, etc..., les groupes doubles de deux lits impairs étant séparés par des intervalles vides de deux pas (deux vés 3 vides) sans intervention de l'élévateur C. L'élévateur C n'intervient que pour les tuyaux T6, T16, T26, T36, etc...

Comme on le voit, l'installation de l'invention permet de transférer du transporteur A amont au transporteur aval B un groupe pair de tuyaux en transformant ledit groupe pair en un groupe impair. Si n est le nombre impair (égal à 5 dans le cas présent) de tuyaux à grouper en lits impairs L sur le transporteur aval B, on commence par former ou isoler des groupes "doubles" de tuyaux dont le nombre est de 2n (donc le double du nombre impair n à obtenir dans chaque lit impair) et l'on sépare de deux pas deux groupes doubles successifs comprenant 2n tuyaux. Puis, à l'intérieur de chaque groupe double de 2n tuyaux, on procède de la manière suivante: On met à part, en le soulevant audessus du transporteur A, à l'arrêt de celui-ci, le tuyau de rang (n + 1) qui se trouve en chevauchement sur les transporteurs A et B. Puis, on raméne le tuyau de rang (n + 1) précédemment soulevé sur le transporteur amont A, à la place qu'il occupait, en tête du groupe pair suivant à transférer, mais en ne transférant que les (n-1) tuyaux suivants.

En d'autres termes, si l'on considère sur le transporteur amont A qui avance par saccades de deux pas des groupes doubles de tuyaux en nombre pair égal au double du nombre impair de tuyaux que l'on veut grouper en lits impairs sur le transporteur aval B, c'està-dire par exemple de dix tuyaux alors que l'on veut constituer des lits de cinq tuyaux sur le transporteur aval B, on en transfère d'abord six, le sixième étant dans la zone de chevauchement des transporteurs A et B qui avancent en continu, on soulève le sixième pendant l'arrêt du transporteur A et on le redépose sur le transporteur A pendant que les cinq premiers s'éloignent. Puis on fait suivre le sixième des quatre tuyaux suivants sur le transporteur B.

Bien entendu, ce procédé est applicable à la confection de lits de trois tuyaux à partir de deux paires de tuyaux amenés ou bien à la confection de lits de sept tuyaux à partir de quatre paires de tuyaux amenés, alors que l'exemple décrit ci-dessus est relatif à la confection de lits de cinq tuyaux à partir de trois paires de tuyaux amenés sur le transporteur amont A.

Pour constituer des lits L en nombre pair de tuyaux, l'élévateur C ne sert à rien puisqu'il suffit au transporteur A de déverser ses groupes pairs de tuyaux sur le transporteur B.

En variante de l'invention (Fig. 12 et 13), les chaînes 6 du transporteur aval B peuvent être à un niveau supérieur à celui des chaînes 2 du transporteur amont A. Pour effectuer le transfert des tuyaux entre le transporteur A et le transporteur B, il faut alors interposer entre les chaînes 2 et 6 un transporteur ascendant intermédiaire A1 à vés individuels de support des tuyaux espacés comme ceux du transporteur A, ledit transporteur ascendant intermédiaire A1 progressant au même rythme discontinu que le transporteur A et chevauchant à la fois les transporteurs A et B. Un tel transporteur ascendant A1 est incliné avec une pente ascendante vers le transporteur aval B. Le transporteur ascendant A1 est combiné avec l'élévateur C et avec le transporteur aval B de la même manière que le transporteur amont A de l'exemple d'exécution décrit ci-dessus.

En position basse (Fig. 12), il recueille les tuyaux par paires. En position haute (Fig. 13) où il est légèrement au-dessus du transporteur aval B, ce qui raméne à l'exemple d'exécution précédent, il transfère les tuyaux sur le transporteur B avec, périodiquement, des interventions de l'élévateur C.

En d'autres termes, pour l'obtention de groupes impairs à partir de groupes pairs, le transporteur ascendant intermédiaire A1 est l'équivalent du transporteur amont A tel qu'il est mentionné dans la revendication de procédé et tel qu'il est défini dans la revendication générale d'installation.

En variante encore, pour la confection de lits impairs, en utilisant l'installation des Fig. 2 à 5, au lieu d'emplir sans arrêt le transporteur amont A en paires de tuyaux disposés tête-bêche, on emplit seulement le transporteur A d'un nombre pair de tuyaux égal au nombre impair désiré pour chaque lit augmenté ou diminué d'une unité. Mais le rôle et le fonctionnement de l'élévateur C à leviers 9 restent les mêmes que précédemment.

Par exemple, pour des lits L de cinq tuyaux, on amène d'abord six tuyaux sur le transporteur A. On les évacue sur le transporteur aval B de manière à libérer le transporteur A, en retenant le dernier à l'aide de l'élévateur C à leviers 9 comme décrit précédemment.

Puis, on redescend le tuyau mis à part et l'on amène quatre tuyaux sur le transporteur amont A, et l'on transfère le tout sur le transporteur aval B.

Ainsi, même après avoir reçu six tuyaux sur le transporteur A, alors qu'il n'en faudrait évacuer que cinq sur le transporteur B pour confectionner un lit impair, on libère totalement le transporteur A en mettant à part le sixième tuyau, de sorte que le transporteur A peut recevoir quatre nouveaux tuyaux, qui seront évacués avec celui qui était mis à part.

## Revendications

1.- Procédé de manutention de tuyaux en fonte à emboîtement deux par deux en vue de transformer des groupes de tuyaux de nombre pair en des groupes de nombre impair au cours d'un transfert de ces tuyaux deux par deux d'un transporteur (A) à un autre (B), ce procédé étant caractérisé en ce que l'on forme ou l'on isole ces groupes de tuyaux de nombre pair constituant des groupes doubles, c'est-à-dire des groupes de tuyaux dont le nombre est le double du nombre impair de tuyaux que l'on veut grouper en lits impairs puis, chaque groupe double est subdivisé en un premier et un second nombres pairs de tuyaux dont on transfère le premier nombre pair supérieur d'une unité au nombre impair souhaité en laissant le dernier tuyau dudit premier nombre pair à cheval sur les deux transporteurs, on met provisoirement à part ledit dernier tuyau, puis on le ramène à cheval sur les deux transporteurs (A, B) en tête du deuxième nombre pair suivant à transférer dont le nombre pair est inférieur d'une unité au nombre impair souhaité, puis l'on transfère ledit deuxième nombre pair suivant qui comporte en tête ledit tuyau mis à part, et l'on répète ces opérations en mettant successivement à part le dernier tuyau d'un premier nombre pair en nombre supérieur d'une unité au nombre impair souhaité, et en l'ajoutant à la tête du deuxième nombre pair suivant en nombre inférieur d'une unité au nombre impair souhaite.

2.- Procédé suivant la revendication 1 caractérisé en ce que l'on forme ou l'on isole des groupes doubles de tuyaux dont le nombre est le double du nombre impair souhaité pour constituer des lits impairs de tuyaux en séparant deux groupes doubles successifs par un intervalle vide correspondant à la place occupée par deux tuyaux successifs ou un multiple de deux tuyaux sur le transporteur amont progressant par à-coups de deux pas.

3.- Installation pour mettre en oeuvre le procédé suivant la revendication 1, cette installation du type comprenant un transporteur amont (A) à chaînes sans fin parallèles (2), munies de supports individuels (3) de tuyaux en V, espacés à pas ou intervalles réguliers, lesdites chaînes (2) avançant de manière discontinue de deux pas à la fois pour recevoir par paires des tuyaux (T) en provenance de la fabrication, et à la suite de ce transporteur amont (A) un transporteur aval (B) du type comportant deux chaînes sans fin (6) parallèles entre elles et à celles du transporteur amont (A), l'extrémité amont du transporteur aval (B) chevauchant l'extrémité aval du transporteur amont (A), ledit transporteur aval (B) progressant en mouvement continu, cette installation étant caractérisée en ce que, entre les extrémités qui se chevauchent des chaînes (2) du transporteur amont (A) et des chaînes (6) du transporteur aval (B), est interposé un élévateur (C) d'un tuyau unique (T6) susceptible d'occuper deux positions, l'une supérieure située au-dessus du niveau des chaînes (2 et 6) des deux transporteurs amont (A) et aval (B), l'autre inférieure située au-dessous desdites chaînes (2 et 6).

4.- Installation suivant la revendication 3 caractérisée en ce que le chevauchement entre l'extrémité amont du transporteur aval (B) et l'extrémité aval du transporteur amont (A) est d'un pas ou d'un intervalle entre deux vés consécutifs (3) de supports individuels d'un tuyau (T) sur le transporteur amont (A).

5.- Installation suivant la revendication 3 caractérisée en ce que l'écartement des chaînes parallèles (6) du transporteur aval (B) est supérieur à celui des chaînes parallèles (2) du transporteur amont (A) tout en restant sensiblement inférieur à la longueur d'un tuyau (T).

6.- Installation suivant la revendication 3 caractérisée en ce que le transporteur aval (B) est à un niveau inférieur à celui du transporteur amont (A).

7.- Installation suivant la revendication 3 caractérisée en ce que l'élévateur (C) comporte une paire de leviers ou bras élévateurs (9) articulés, soumis à l'action de vérins synchronisés (15) et portant une paire de vés (13) de supports individuels d'un tuyau (T) en position horizontale, ladite paire de vés (13) étant située près de l'extrémité aval du transporteur amont (A) et de l'extrémité amont du transporteur aval (B), les creux desdits vés (13) étant au voisinage de l'axe (XX) commun auxdites extrémités, et lesdits vés (13) étant susceptibles d'occuper deux positions, l'une inférieure, au-dessous des deux transporteurs (A et B), l'autre supérieure au- dessus des deux transporteurs (A et B) pour mettre un tuyau à part, provisoirement.

8.- Installation suivant la revendication 3 caractérisée en ce que, lorsque le transporteur aval (B) est à un niveau supérieur à celui du transporteur amont (A), un transporteur ascendant intermédiaire (AI) à vés individuels (3) de supports de tuyaux est interposé entre les deux transporteurs précités (A et B), ledit transporteur ascendant intermédiaire (AI) progressant au même rythme discontinu de deux pas que le transporteur amont (A) et chevauchant à la fois les transporteurs (A et B), et étant combiné avec l'élévateur (C) de mise à part d'un tuyau (T) et avec le transporteur aval (B) de telle sorte qu'il chevauche d'un pas le transporteur aval (B) et que l'élévateur de mise à part (C) soit situé au droit de ladite zone de chevauchement.

**Claims**

1. Method of handling cast-iron pipes comprising a socket in pairs with a view to transforming groups of pipes of an even number into groups of an uneven number as these pipes are transferred in pairs from a conveyor (A) to another (B), this method being characterised in that one forms or isolates these groups of pipes of even number constituting double groups, i.e. groups of pipes whereof the number is twice that of the uneven number of pipes which one wishes to combine in uneven layers, then each double group is subdivided into a first and a second even number of pipes whereof the first even number greater by one unit than the desired uneven number is transferred by leaving the last pipe of the said first even number astraddle on the two conveyors, the said last pipe is provisionally put aside, then it is replaced astraddle the two conveyors (A, B) at the head of the following second even number to be transferred whereof the even number is less by one unit than the desired uneven number, then the said following even number which at the head comprises the said pipe which has been put aside is transferred and these operations are repeated by successively placing aside the last pipe of a first even number having a number greater by one unit than the desired uneven number and adding it to the head of the second following even number the number of which is less by one unit than the desired uneven number.

2. Method according to Claim 1, characterised in that one forms or isolates double groups of pipes whereof the number is twice the desired uneven number in order to constitute uneven layers of pipes by separating two successive double groups by an empty gap corresponding to the place occupied by two successive pipes or a multiple of two pipes on the upstream conveyor moving in jerks of two steps.

3. Installation for carrying out the method according to Claim 1, this installation being of the type comprising an upstream conveyor (A) having parallel endless chains (2), provided with V-shaped individual supports (3) for pipes, spaced at regular steps or intervals, the said chains (2) moving forwards discontinuously by two steps at once in order to receive pairs of pipes (T) coming from the production line and following this upstream conveyor (A) a downstream conveyor (B) of the type comprising two endless chains (6) parallel to each other and to those of the upstream conveyor (A), the upstream end of the downstream conveyor (B) overlapping the downstream end of the upstream conveyor (A), the said downstream conveyor (B) moving continuously, this installation being characterised in that interposed between the overlapping ends of the chains (2) of the upstream conveyor (A) and the chain (6) of the downstream conveyor (B) is an elevator (C) for a single pipe (T6) which is able to occupy two positions, an upper position situated above the level of the chains (2 and 6) of the upstream conveyor (A) and downstream conveyor (B), and a lower position situated below the said chains (2 and 6).

4. Installation according to Claim 3, characterised in that the overlap between the upstream end of the downstream conveyor (B) and the downstream end of the upstream conveyor (A) is one step or one gap between two consecutive individual support V's (3) for a pipe (T) on the upstream conveyor (A).

5. Installation according to Claim 3, characterised in that the spacing of parallel chains (6) of the downstream conveyor (B) is greater than that of the parallel chains (2) of the upstream conveyor (A) whilst remaining substantially less than the length of a pipe (T).

6. Installation according to Claim 3, characterised in that the downstream conveyor (B) is at a lower level than that of the upstream conveyor (A).

7. Installation according to Claim 3, characterised in that the elevator (C) comprises a pair of levers or pivoted lifting arms (9), subject to the action of synchronised jacks (15) and supporting a pair of individual support V's (13) for a pipe (T) in the horizontal position, the said pair of V's (13) being situated close to the downstream end of the upstream conveyor (A) and the upstream end of the downstream conveyor (B), the hollows of the said V's (13) being in the vicinity of the axis (XX), common to the two ends and the said V's (13) being able to occupy two positions, a lower position below the two conveyors (A and B), the other being an upper position above the two conveyors (A and B) in order to set the pipe aside provisionally.

8. Installstion according to Claim 3, characterised in that when the downstream conveyor (B) is at a level higher than that of the upstream conveyor (A), an intermediate ascending conveyor (A1) comprising individual V's (3) for supporting the pipes is interposed between the two aforesaid conveyors (A and B), the said intermediate ascending conveyor (A1) moving at the same discontinuous rhythm of two steps as the upstream conveyor (A) and at the same time overlapping the conveyors (A and B) and being combined with the elevator (C) for setting a pipe (T) aside and with the downstream conveyor (B) so that it overlaps the downstream conveyor (B) by one step and that the elevator (C) for setting the pipe aside is situated in line with the said overlapping region. _

_

## Patentansprüche

1. Verfahren zum paarweisen Handhaben von Gußrohren mit Muffe zur Umwandlung von Gruppen von Rohren mit gerader Anzahl in Gruppen von Rohren mit ungerader Anzahl während einer paarweisen Förderung dieser Rohre von einem Förderer (A) zu einem anderen (B), wobei sich dieses Verfahren dadurch auszeichnet, daß man diese doppelten Gruppen bildenden Gruppen von Rohren mit gerader Anzahl bildet oder trennt, d. h. Gruppen von Rohren, deren Anzahl gleich dem Doppelten der ungeraden Anzahl von Rohren ist, die man in ungeradzahligen Lagen gruppieren will, wonach jede doppelte Gruppe in eine erste und eine zweite gerade Anzahl von Rohren unterteilt wird, von denen man die erste gerade Anzahl fördert, die um eine Einheit größer als die gewünschte Anzahl ist, wobei das letzte Rohr der ersten geraden Anzahl auf den beiden Förderern aufgesetzt wird, daß man dieses letzte Rohr provisorisch beiseite gibt, wonach es auf die beiden Förderer(A, B) am vorderen Ende der nachfolgenden zweiten geraden Anzahl aufgesetzt wird, deren gerade Anzahl um eine Einheit kleiner als die gewünschte ungerade Anzahl ist, wonach man die nachfolgende zweite gerade Anzahl fördert, die am vorderen Ende das beiseite gegebene Rohr aufweist, und daß man diese Vorgänge wiederholt unter aufeinanderfolgendem Beiseitegeben des letzten Rohrs einer ersten geraden Anzahl, deren Anzahl um eine Einheit größer als die gewünschte Anzahl ist, und unter Hinzufügung des Rohrs am vorderen Ende der nachfolgenden zweiten geraden Anzahl, deren Anzahl um eine Einheit kleiner als die gewünschte Anzahl ist.

2. Verfahren nach Anspruch 1, dadurch gekennzeichnet, daß man doppelte Gruppen von Rohren formt oder trennt, deren Anzahl gleich der doppelten gewünschten ungeraden Anzahl ist, um ungeradzahlige Lagen von Rohren zu bilden, durch Trennen von zwei aufeinanderfolgenden doppelten Gruppen durch ein leeres Intervall, das dem Platz entspricht, der von zwei aufeinanderfolgenden Rohren oder von einem Vielfachen zweier Rohre auf dem in Bewegungsrichtung aufwärts gelegenen Förderer eingenommen wird, der in Schüben von zwei Schritten fortschreitet.

3. Vorrichtung zur Durchführung des Verfahrens nach Anspruch 1,
mit einem in Bewegungsrichtung aufwärts gelegenen Förderer (A) mit parallelen endlosen Ketten (2), die mit einzelnen V-förmigen Rohrträgern (3) versehen sind, die in regelmäßigen Schritten oder Intervallen beabstandet sind, wobei sich die Ketten (2) um zwei Schritte auf einmal unterbrochen vorwärtsbewegen, um Paare von von der Fertigung stammenden Rohren (T) aufzunehmen, und im Anschluß an diesen in Bewegungsrichtung aufwärtsgelegenen Förderer (A)
mit einem in Bewegungsrichtung abwärtsgelegenen Förderer (B) der Bauart mit zwei parallelen endlosen Ketten (6), die zueinander und zu denjenigen des in Bewegungsrichtung aufwärtsgelegenen Förderers (A) parallel sind, wobei das in Bewegungsrichtung aufwärtsgelegene Ende des in Bewegungsrichtung abwärtsgelegene Förderers (B) das in Bewegungsrichtung abwärtsgelegene Ende des in Bewegungsrichtung aufwärtsgelegenen Förderers (A) überdeckt, wobei sich der in Bewegungsrichtung abwärtsgelegene Förderer (B) in einer kontinuierlichen Bewegung bewegt,
dadurch gekennzeichnet,
daß zwischen den sich überdeckenden Enden der Ketten (2) des in Bewegungsrichtung aufwärtsgelegenen Förderers (A) und den Ketten (6) des in Bewegungsrichtung abwärtsgelegenen Förderers (B) eine Hebeeinrichtung (C) für ein einziges Rohrs (T6) angeordnet ist, die zwei Stellungen einnehmen kann, von denen je eine obere sich über dem Niveau der Ketten (2 und 6) der beiden in Bewegungsrichtung aufwärts (A) und in Bewegungsrichtung abwärts (B) gelegenen Förderer befindet, während sich die andere unter den Ketten (2 und 6) befindet.

4. Vorrichtung nach Anspruch 3, dadurch gekennzeichnet,
daß die Überdeckung zwischen dem in Bewegungsrichtung aufwärtsgelegenen Ende des in Bewegungsrichtung abwärtsgelegenen Förderers (B) und dem in Bewegungsrichtung abwärtsgelegenen Ende des in Bewegungsrichtung aufwärtsgelegenen Förderers (A) ein Schritt oder Intervall zwischen zwei aufeinanderfolgenden Prismenauflagen (3) von einzelnen Trägern eines Rohrs (T) auf dem in Bewegungsrichtung aufwärtsgelegenen Förderer (A) ist.

5. Vorrichtung nach Anspruch 3, dadurch gekennzeichnet,
daß der Abstand der parallelen Ketten (6) des in Bewegungsrichtung abwärtsgelegenen Förderers (B) größer als derjenige der parallelen Ketten (2) des in Bewegungsrichtung aufwärtsgelegenen Förderers (A) ist und dabei im wesentlichen kleiner als die Länge eines Rohrs (T) bleibt.

6. Vorrichtung nach Anspruch 3, dadurch gekennzeichnet,
daß der in Bewegungsrichtung abwärtsgelegene Förderer (B) sich auf einem niedrigeren Niveau als demjenigen des in Bewegungsrichtung aufwärtsgelegenen Förderers (A) befindet.

7. Vorrichtung nach Anspruch 3, dadurch gekennzeichnet,

daß die Hebeeinrichtung (C) ein Paar von angelenkten Hubhebeln oder -armen (9) aufweist, die der Wirkung von synchronisierten Stellzylindern (15) unterworfen sind und ein Paar von einzelnen Prismenauflagen (13) zum Tragen eines Rohrs (T) in waagerechter Lage aufweisen, wobei das Paar von Prismenauflagen (13) sich in der Nähe des in Bewegungsrichtung abwärtsgelegenen Endes des in Bewegungsrichtung aufwärtsgelegenen Förderers (A) und des in Bewegungsrichtung aufwärtsgelegenen Endes des in Bewegungsrichtung abwärtsgelegenen Förderers (B) befindet, wobei sich die Vertiefungen der Prismenauflagen (13) in Nähe der gemeinsamen Achse (XX) der Enden befinden und wobei die Prismenauflagen (13) zwei Stellungen einnehmen können, eine untere unter den beiden Förderern (A und B) und eine obere über den beiden Förderern (A und B), um ein Rohr provisorisch beiseite zu geben.

8. Vorrichtung nach Anspruch 3, dadurch gekennzeichnet,

daß, wenn sich der in Bewegungsrichtung abwärtsgelegene Förderer (B) auf einem Niveau über demjenigen des in Bewegungsrichtung aufwärtsgelegenen Förderers (A) befindet, ein ansteigender Zwischenförderer (AI) mit einzelnen Prismenauflagen (3) zum Tragen von Rohren zwischen den beiden vorgenannten Förderern (A und B) angeordnet ist, wobei sich der ansteigende Zwischenförderer (A1) im gleichen um zwei Schritte unterbrochenen Rhythmus wie der in Bewegungsrichtung aufwärtsgelegene Förderer (A) vorwärtsbewegt, gleichzeitig die Förderer (A und B) überdeckt und mit der Hebeeinrichtung (C) zum Beiseitegeben eines Rohrs (T) sowie mit dem in Bewegungsrichtung abwärtsgelegenen Förderer (B) derart kombiniert ist, daß er den in Bewegungsrichtung abwärtsgelegenen Förderer (B) um einen Schritt überdeckt und die Hebeeinrichtung (C) zum Beiseitegeben sich an der Stelle der Überdeckungszone befindet.

**Fig. 1**

**Fig. 2**

**Fig. 3**

Fig. 4

Fig.5

Fig.6

Fig.7

Fig. 8

Fig. 9

Fig.10

Fig.11

Fig . 12

Fig . 13